# EUROPÄISCHE PATENTSCHRIFT

(11) **EP 1 170 408 B1**
(45) Veröffentlichungstag und Bekanntmachung des Hinweises auf die Patenterteilung: **01.09.2004**
(21) Anmeldenummer: 01109083.4
(22) Anmeldetag: 12.04.2001
(51) Int. Cl.: D01H 4/12, F16F 15/00

(54) **Rotorspinnvorrichtung mit einer berührungslosen passiven radialen Lagerung des Spinnrotors**
Rotor spinning device wherein the rotor is suspended by passive non-contact radial bearings
Dispositif de filature à rotor dans lequel le rotor est suspendu par des porteurs radiaux passives et sans contact

(30) Priorität: 04.07.2000 DE 10032440
(43) Veröffentlichungstag der Anmeldung: 09.01.2002
(73) Patentinhaber: Saurer GmbH & Co. KG, 41069 Mönchengladbach (DE)
(72) Erfinder: Coenen, Norbert, 41199 Mönchengladbach (DE)
(74) Vertreter: Hamann, Arndt, Dipl.-Ing.

(56) Entgegenhaltungen:
- EP-A- 0 612 933
- DE-A- 3 844 563
- DE-A- 19 819 767
- US-A- 3 650 581
- US-A- 3 845 997
- US-A- 4 037 886

## Beschreibung

Die Erfindung betrifft eine Rotorspinnvorrichtung mit einer berührungslosen passiven radialen Lagerung des Spinnrotors nach dem Oberbegriff des Anspruchs 1.

Sogenannte passive Magnetradiallager, bei denen die Lagerung mit Permanentmagneten bewirkt wird, erfordern gegenüber einem aktiv geregelten Magnetlager erheblich geringeren Aufwand. Bei passiven Magnetradiallagerungen besteht eine statische Stabilität in den radialen Richtungen. Die radiale dynamische Stabilität ist jedoch gering. Jede Anregung des Lagersystems führt zu unerwünschten schwach gedämpften Schwingungen. Eine Verbesserung dieses Zustandes kann durch eine zusätzliche Schwingungsdämpfung erreicht werden.

Aus der DE 195 43 745 ist eine passive Schwingungsdämpfung radialer Schwingungen bekannt. Dabei wird der Statormagnet eines Magnetlagers elastisch an Federbeinen aufgehängt. Zur Dämpfung der Schwingungsbewegung des Statormagneten, der in einer Ebene parallel zu den Magnetflächen des Rotor- und Statormagneten schwingt, ist eine mechanische Reibvorrichtung vorgesehen. Ab einer bestimmten Größe der Schwingungsamplitude setzt die Reibung ein. Solange diese Größe der Schwingungsamplitude nicht erreicht ist, erfolgt keine Dämpfung. Eine derart verzögert einsetzende Dämpfung steht einem dauerhaft schwingungsarmen Lauf des Rotors entgegen.

Die DE 29 19 236 C2 beschreibt ein magnetisches Schwebelager für einen Rotor, wobei mit Permanentmagneten eine passive radiale Stabilisierung erfolgt. Die Dämpfung wird durch Wirbelstromverluste in Art einer Wirbelstrombremse bewirkt.

Die DE 198 19 767 A1 beschreibt eine Dämpfungseinrichtung für passive radiale Lagerungen von Spinnrotoren. Die Dämpfung erfolgt mittels einer Reibvorrichtung, deren Reibpartner mechanisch beaufschlagbare Reibflächen aufweisen. Einer der Reibpartner ist radial lagefest an einem Lagerteil angeordnet, und der andere Reibpartner wird radial lageveränderbar gehalten. Der radial lageveränderbare Reibpartner weist eine Lagerkomponente auf, die den Rotorschaft des Rotors umschließt. Durch diese Lagerkomponente wird das Auftreten großer Schwingungsamplituden, bei denen der Rotor am Stator anschlagen kann, vermieden. Die Dämpfung setzt die auftretenden Schwingungen in Reibung um.

Mit den beschriebenen bekannten Schwingungsdämpfungssystemen läßt sich nur eine unvollkommene beziehungsweise zu geringe Dämpfungswirkung erzielen. In der DE 198 19 767 A1 wird zwar als weitere Möglichkeit zur Dämpfung berührungslos gelagerter Rotoren eine aktive Dämpfung erwähnt. Die Druckschrift gibt aber keinerlei Hinweise, wie eine derartige aktive Dämpfung ausgeführt sein soll. Es wird lediglich darauf hingewiesen, daß für eine aktive Dämpfung ein relativ hoher Aufwand erforderlich ist.

Bei Dämpfungsvorrichtungen, die mit Reibwirkung arbeiten, tritt Verschleiß auf, der zusätzliche Wartung beziehungsweise Austausch von Verschleißteilen erfordert. Ist die mittels einer Reibvorrichtung erzeugte Dämpfung zu hart eingestellt, besteht die Gefahr, daß keine Dämpfung durch die Dämpfungsvorrichtung bewirkt wird, sondern bei passiven Lagerungen eine Dämpfung unerwünscht und völlig ungenügend durch die Magnetlagerung selbst erfolgt. Bei zu weich eingestellter Dämpfung ist die Dämpfungswirkung selbst dann zu schlecht, wenn die Dämpfungsvorrichtung arbeitet. Daher wird üblicherweise ein Optimum bei der Einstellung der Dämpfungswirkung ermittelt. Es werden sogenannte Dämpfungsbilder von hart bis weich, je nach Anforderung, eingestellt. Das Zusammenwirken der Elemente einer Reibvorrichtung, mit dem ein bestimmter Dämpfungswert beziehungsweise ein bestimmter Dämpfungsfaktor eingestellt wird, ist abhängig von Material, Temperatur, Alterung und Reibung und somit nicht oder nur schlecht reproduzierbar. Daher muß immer wieder aufs neue eine aufwendige Optimierung der Einstellung vorgenommen werden.

Die gattungsbildende US 3,845,997 beschreibt eine Magnetlagereinrichtung für einen Rotor, bei der die Magnetlagereinrichtung zur Dämpfung von transversalen Kräften, denen der Rotor unterworfen ist, geeignet ist. Die Magentlagereinrichtung wirkt auf den Rotor mit einer Kraftkomponente ein, die durch Elektromagnete direkt auf den Rotorschaft aufgebracht wird, um den Rotor in radialer Richtung in seiner Lage zu halten und eine Dämpfung zu bewirken. Eine weitere Kraftkomponente, die durch ortsfeste Permanentmagneten ebenfalls direkt auf den Rotorschaft aufgebracht wird, überlagert die erste Kraftkomponente und dient im wesentlichen dazu, einen Teil der quer zur Rotorachse wirkenden Kraft zu absorbieren. Die magnetischen Kräfte wirken auf den Rotorschaft ein, der aus ferromagnetischem Material besteht. Um ausreichende Magnetkräfte auf den Rotor wirken lassen zu können, ist ein den Rotor vollständig umfassender Elektromagnet eingesetzt. Dies bedeutet einen aufwendigen Aufbau der Magnetlagereinrichtung. Nur für den Sonderfall, bei dem ein gezielter Destabilisierungseffekt erzeugt werden soll, wird zusätzlich ein Stabmagnet eingesetzt, der mit dem Rotor rotiert und dabei nicht mit dem aktiv gesteuerten Elektromagneten, sondern mit einem den Rotor umschließenden ortsfesten Ring, der ferromagnetische Eigenschaften hat, zusammenwirkt. Mit dem Stabmagneten kann weder ein Einhalten der Lage des Rotors in radialer Richtung noch eine Dämpfung von den Rotor auslenkenden Kräften erzielt werden.

Es ist Aufgabe der Erfindung, die Dämpfung radialer Schwingungen eines mittels eines passiven Magnetradiallagers gelagerten Spinnrotors zu verbessern, ohne einen hohen Aufwand betreiben zu müssen.

Diese Aufgabe wird erfindungsgemäß durch eine Rotorspinnvorrichtung mit den Merkmalen des Anspruchs 1 gelöst.

Vorteilhafte Ausgestaltungen der Erfindung sind Gegenstand der Unteransprüche.

Mit der erfindungsgemäßen Vorrichtung ist eine außerordentlich leistungsfähige und schnell wirksame Dämpfung radial gerichteter Schwingungen des Spinnrotors möglich. Auf diese Weise läßt sich eine verbesserte Laufruhe des Spinnrotors erzielen.

Ein besonders geringer baulicher Aufwand reicht für eine erfindungsgemäße Vorrichtung aus, weil das rotierende Magnetelement, auf das die Aktorelemente wirken, ein Wirkelement der passiven Lagerung des Spinnrotors ist. Die Wirkstelle liegt zur Verbesserung der Dämpfungswirkung nahe am Ende des Rotorschaftes.

In einer vorzugsweisen Ausführungsform umfaßt die Sensorik an der Wirkstelle mindestens zwei Sensorelemente zur Detektion radialer Lageabweichungen des Rotorschaftes und sind die Sensorelemente und die Aktorelemente der Wirkstelle in einer senkrecht zur Rotationsache aufgespannten Ebene angeordnet. Bevorzugt sind die Aktorelemente zu den Sensorelementen der Wirkstelle in Rotationsrichtung winkelversetzt angeordnet. Vorteilhaft sind zwei Aktorelemente zueinander und zwei Sensorelemente zueinander in Rotationsrichtung jeweils um 90° winkelversetzt angeordnet. Damit ist eine baulich kompakte Ausbildung der Dämpfungseinrichtung ohne großen Aufwand möglich. Die Detektion der radialen Lageabweichungen sowie die Regelung der Aktorik läßt sich einfach und genau durchführen. Die Regeleinrichtung ist so ausgeführt, daß der Winkelversatz von Aktorelementen und Sensorelementen auf einfache Weise in der Signalverarbeitung berücksichtigt werden kann.

Ist jedem Aktorelement ein in bezug auf die Rotationsachse diametral gegenüberliegendes zusätzliches Aktorelement zugeordnet und wird das rotierende Magnetelement vom Aktorelement und vom zusätzlichen Aktorelement jeweils mit der gleichen Kraft beaufschlagt, läßt sich die dämpfend wirkende Kraft auf einfache Weise verdoppeln. Die von Aktorelement und zusätzlichem Aktorelement ausgeübte Kraft ist dabei sowohl im Betrag wie auch in der Richtung gleich. Mit dieser Ausführung lassen sich die auf das rotierende Magnetelement und damit auf den Rotorschaft einwirkenden statischen magnetischen Kräfte neutralisieren, die bei Verwendung von Aktorelementen auftreten, die jeweils eine Magnetspule mit Eisenkern zur Erzeugung wirkungsvoller Magnetkräfte aufweisen.

Vorzugsweise ist das rotierende Magnetelement als ein den Rotorschaft umschließender Permanentmagnetring ausgebildet, und die Aktorelemente sind bevorzugt axial beabstandet vor dem Permanentmagnetring angeordnet. Auf diese Weise können die Aktorelemente sehr nahe an das rotierende Magnetelement gebracht und der Luftspalt zwischen Magnetelement und Aktorelement klein gehalten werden, ohne daß die Bandagen um den Außenumfang des Magnetelementes hinderlich sind. Derartige Bandagen werden üblicherweise bei mit hoher Drehzahl umlaufenden Spinnrotoren um die Magnetringe gelegt. Je geringer der Luftspalt zwischen Aktorelement und Magnetelement ist, desto höher ist die Wirksamkeit der Dämpfung, die erzielt werden kann.

Bevorzugt weist die Regeleinrichtung Elemente auf, die zur ausschließlich kapazitiven Auskopplung der von den Sensorelementen generierten Signale dienen. Bei einer derartigen Ausführung werden nur die dynamischen Signalkomponenten übertragen. Dadurch wirken sich Nullpunktfehler der Sensorelemente nicht aus. Durch die Beschränkung auf die Wechselstromanteile fließen nur geringe Ströme, die jedoch für die Regelung der Dämpfung ausreichend hoch sind.

Mit der erfindungsgemäßen Vorrichtung läßt sich die Dämpfung radialer Schwingungen gegenüber bekannten Vorrichtungen deutlich verbessern. Das gewünschte Optimum der Dämpfung läßt sich ohne langwierige Optimierungsverfahren stets problemlos treffen, da die Dämpfungswirkung reproduzierbar ist. Die ohne Verzögerung und wirksam einsetzende Dämpfung kann mit der Erfindung ohne hohen Aufwand erreicht werden.

Die Erfindung wird anhand der Darstellung der Figuren weiter erläutert.

Es zeigt:
- Fig. 1: in Seitenansicht eine schematische Darstellung einer Rotorspinnvorrichtung mit einer berührungslosen passiven Spinnrotorlagerung, teilweise im Schnitt,
- Fig. 2: eine schematische Darstellung der Anordnung von Sensorelementen und Aktorelementen an einer Wirkstelle der Dämpfungseinrichtung einer Rotorspinnvorrichtung, in Vorderansicht,
- Fig. 3: eine schematische Darstellung der Anordnung eines Aktorelementes an der in Figur 2 gezeigten Wirkstelle, in Seitenansicht,
- Fig. 4: eine Darstellung einer alternativen Anordnung eines Aktorelementes, entsprechend der Ansicht von Figur 3,
- Fig. 5: eine Darstellung einer weiteren alternativen Anordnung eines Aktorelementes, entsprechend der Ansicht von Figur 3,
- Fig. 6: eine schematische Darstellung einer ersten Regelschleife mit den beiden Sensorelementen und zwei Aktorelementen der Darstellung der Figur 2,
- Fig. 7: eine schematische Darstellung einer zweiten Regelschleife mit den beiden Sensorelementen und zwei weiteren Aktorelementen der Darstellung der Figur 2.

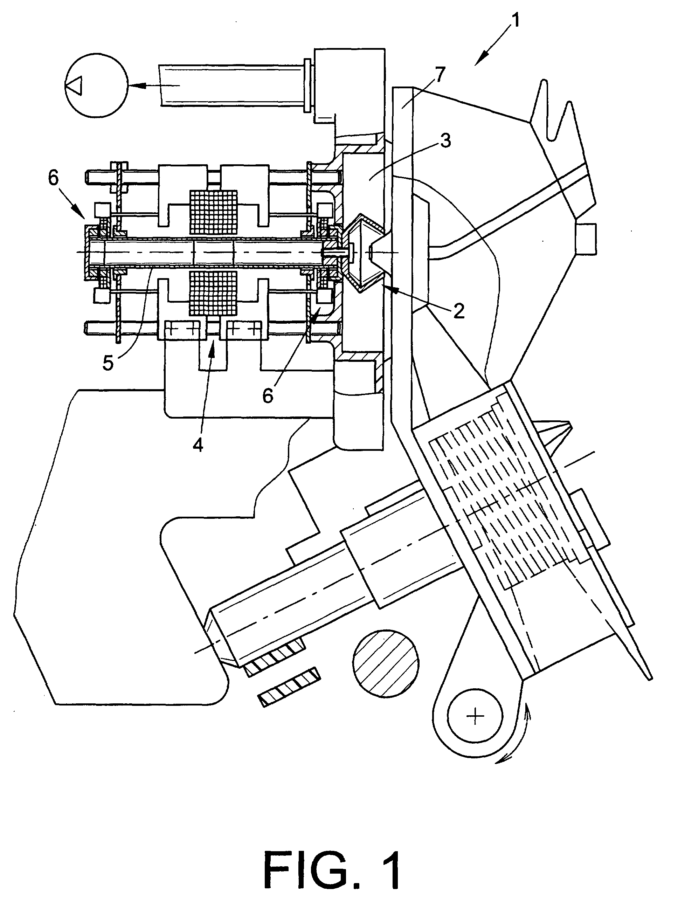

Die bekannte Rotorspinnvorrichtung 1 umfaßt, wie in Figur 1 dargestellt, einen Spinnrotor 2, dessen Spinntasse mit hoher Drehzahl in einem Rotorgehäuse 3 umläuft. Der Antrieb des Spinnrotors erfolgt durch einen elektrischen Einzelantrieb 4. Der Spinnrotor 2 ist mit seinem Rotorschaft 5 sowohl radial als auch axial in einer magnetischen Lagerung 6 fixiert. Die Öffnung des Rotorgehäuses 3 ist während des Spinnvorgangs durch ein schwenkbar gelagertes Deckelelement 7 verschlossen. Bei der magnetischen Lagerung 6 handelt es sich um eine passive Spinnrotorlagerung.
Weitere Einzelheiten einer berührungslosen passiven Spinnrotorlagerung sind zum Beispiel der bereits genannten DE 198 19 767 A1 entnehmbar.

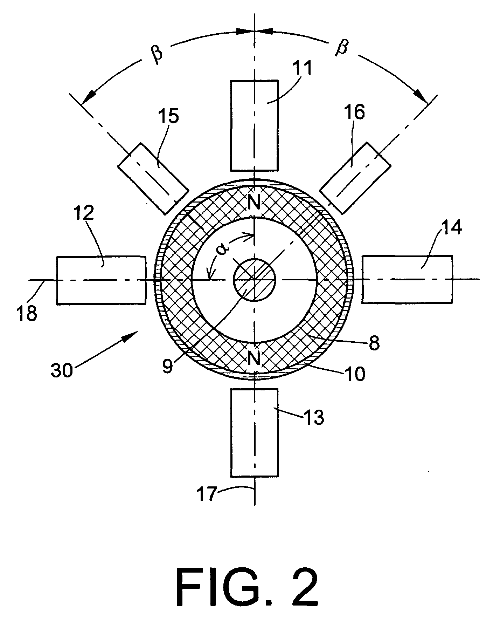

Das in Figur 2 dargestellte, als Permanentmagnetring ausgebildete Magnetelement 8 ist mit dem Rotorschaft 9 eines Spinnrotors fest verbunden. Die in der Vorderansicht der Figur 2 sichtbare Polseite des Permanentmagnetringes ist mit N gekennzeichnet. Das Magnetelement 8 ist mit einer Bandage 10 umgeben. Die Figur 2 zeigt die Position der Aktorelemente 11, 12, 13 und 14 sowie der Sensorelemente 15 und 16. Die Sensorelemente 15, 16 und die Aktorelemente 11, 12, 13, 14 sind in einer senkrecht zur Rotationsachse des Rotorschaftes 9 aufgespannten Ebene angeordnet. Der Winkel α zwischen dem Aktorelement 11 und dem Aktorelement 12 beträgt 90°. Der Winkel β zwischen den Sensorelementen 15, 16 und dem Aktorelement 11 beträgt jeweils 45°. Die Aktorelemente 11 und 13 wirken in Richtung der Dämpfungsachse 17, und die Aktorelemente 12 und 14 wirken in Richtung der Dämpfungsachse 18. Grundsätzlich genügt es, für jede Dämpfungsachse 17, 18 nur einen einzigen Aktor einzusetzen. Mit der in Figur 2 dargestellten Ausführung mit jeweils diametral gegenüberliegenden Aktorelementen 11, 13; 12, 14 läßt sich eine höhere Wirksamkeit der Dämpfung erzielen.

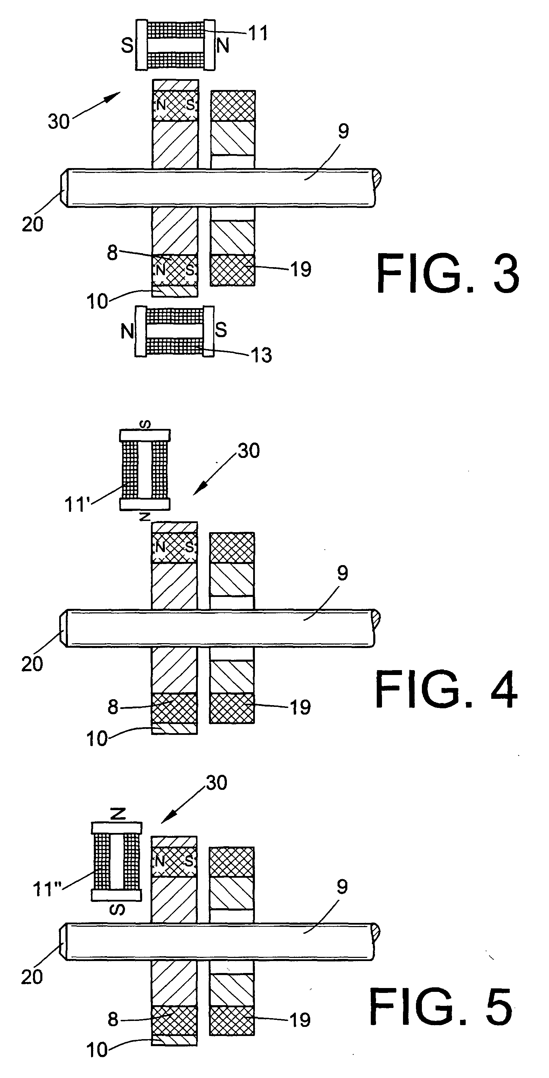

Figur 3 zeigt das fest mit dem Rotorschaft 9 verbundene Magnetelement 8 in Seitenansicht. Während des Spinnbetriebs läuft das Magnetelement 8 mit hoher Drehzahl um. Zur Lagerung des Rotorschaftes 9 wirkt das Magnetelement 8 mit einem feststehenden ebenfalls als Permanentmagnetring ausgebildeten Magnetelement 19 zusammen. Das Aktorelement 11 ist in der Darstellung der Figur 3 über dem Magnetelement 8 angeordnet. Das Aktorelement 11 weist ebenfalls einen Pol N und einen Gegenpol S auf. Das Aktorelement 12 ist dem Aktorelement 11 diametral gegenüber angeordnet, in der Darstellung der Figur 3 unter dem Magnetelement 8. Die Wirkstelle 30 mit dem Magnetelement 8 liegt nahe am Ende 20 des Rotorschaftes 9. Die Aktorelemente 11, 13, 12, 14 weisen jeweils Magnetspulen mit Eisenkernen auf.

Figur 4 zeigt eine alternative Ausführungsform, bei der das Aktorelement 11' eine Position einnimmt, bei der der mit N bezeichnete Pol des Aktorelementes 11' dem Magnetelement 8 zugewandt ist.

Figur 5 zeigt eine weitere alternative Ausführungsform. Das Aktorelement 11' ' ist axial beabstandet vor dem Magnetelement 8angeordnet. Der Luftspalt zwischen Aktorelement 11'' und dem Magnetelement 8ist relativ klein gehalten. Das Einstellen eines sehr kleinen Luftspaltes wird durch die Bandage 10 in dieser Ausführung nicht behindert.

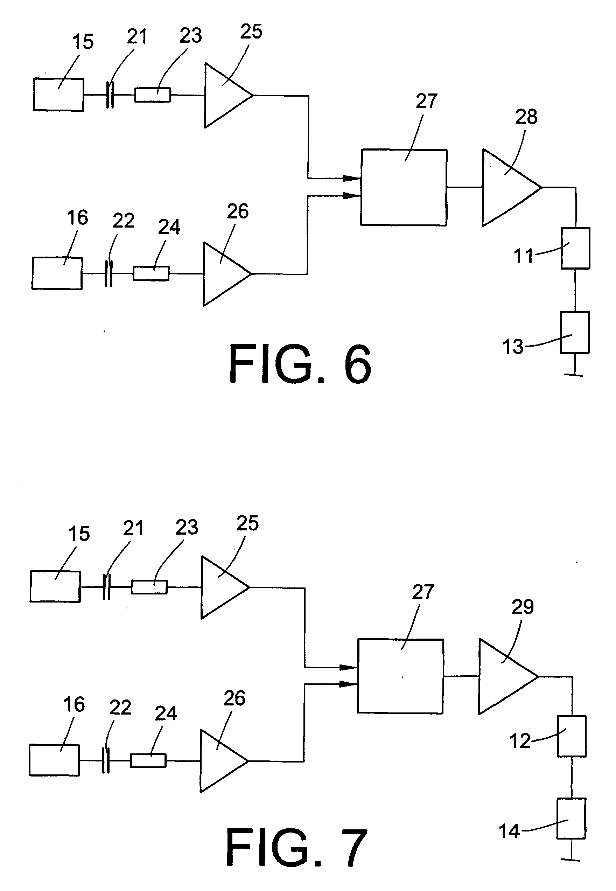

Die Figuren 6 und 7 zeigen Regelschleifen zur Steuerung der zusammenwirkenden Aktorelemente 11 und 13 sowie der zusammenwirkenden Aktorelemente 12 und 14 der in den Figuren 2 und 3 dargestellten Vorrichtung. Zur Auskopplung der vom Sensorelement 15 generierten Signale dient ein Kondensator 21, der über den Widerstand 23 und den Verstärker 25 das Signal an die Regeleinrichtung 27 weiterleitet. Zur Auskopplung des vom Sensorelement 16 generierten Signals ist der Kondensator 22 angeordnet, der über den Widerstand 24 und den Verstärker 26 das Signal an die Regeleinrichtung 27 weiterleitet. Die von den Verstärkern 25 und 26 an die Regeleinrichtung 27 geleiteten Signale werden addiert. Auf diese Weise wird der Winkelversatz zwischen den Sensorelementen 15 und 16 und den Aktorelementen 11 und 13 berücksichtigt. Die Sensorelemente 15 und 16 arbeiten induktiv.

In der in Figur 7 dargestellten Regelschleife wird das vom Sensorelement 15 generierte Signal auf gleiche Weise wie in der in Figur 6 dargestellten Regelschleife an die Regeleinrichtung 27 geleitet. Das vom Sensorelement 16 generierte und vom Verstärker 26 kommende Signal wird in der Regeleinrichtung 27 negiert. Der Wert dieses Signals geht somit als negativer Wert in die Addition ein. Die aus beiden Signalen durch Addition ermittelte Summe ist der Wert, der dem Steuersignal zugrunde liegt, das über den Verstärker 29 an die Aktorelemente 12 und 14 geleitet wird.

In einer nicht dargestellten Ausführungsform der Erfindung arbeitet der Verstärker 26 zur Steuerung der Aktorelemente 12 und 14 als negierender Verstärker. Der Dämpfungsvorgang wird in Abhängigkeit der von den Sensorelementen 15 und 16 generierten Signale durch die Stärke des Stromes gesteuert, der jeweils über die Verstärker 28, 29 an die Aktorelemente 11, 13 sowie die Aktorelemente 12, 14 geleitet wird.

Durch Umkehrung der Stromrichtung kann eine Umpolung der Aktorelemente 11, 13, 12, 14 erfolgen. Auf diese Weise kann die auf den Rotorschaft 9 zur Dämpfung beaufschlagte Magnetkraft sowohl in der Stärke wie in der Richtung gesteuert werden.

Die Pole des Aktorelementes 11 werden wie in der Figur 3 dargestellt ausgerichtet, wenn durch Schwingung eine Auslenkung des Rotorschaftes 9 eintritt, bei der die Lage des Rotorschaftes 9 von der Soll-Lage in der Darstellung der Figur 3 nach unten abweicht. Durch die Lage der Pole des Aktorelementes 11 zieht das Aktorelement 11 das als Permanentmagnetring ausgebildete Magnetelement 8an, während das Aktorelement 13 das Magnetelement 8abstößt. Auf diese Weise wird der durch Schwingung verursachten Lageabweichung entgegengewirkt und damit die Schwingung gedämpft.

Die Aktorelemente 11 und 13 beziehungweise 12 und 14 können, wie in den Figuren 6 und 7 dargestellt, in Reihe oder in einer nicht dargestellten alternativen Ausführungsform parallel geschaltet werden.

## Patentansprüche

1. Rotorspinnvorrichtung mit einer berührungslosen passiven radialen Lagerung des Spinnrotors und mit einer Dämpfungseinrichtung, die zur Dämpfung von radial gerichteten Schwingungen des Spinnrotors ausgebildet ist, wobei die Dämpfungseinrichtung eine Sensoreinrichtung, eine Regeleinrichtung und eine Aktoreinrichtung umfaßt und die Aktoreinrichtung so ausgeführt ist, daß sie an mindestens einer Wirkstelle (30) auf den Rotorschaft (9) einwirkt und an der Wirkstelle (30) mindestens zwei ortsfeste als Magnetelemente ausgebildete Aktorelemente (11, 12) aufweist,
**dadurch gekennzeichnet,**
**daß** ein Magnetelement (8) fest mit dem rotierenden Rotorschaft (9) verbunden ist, daß das Magnetelement (8) sowohl ein Wirkelement der passiven Lagerung des Spinnrotors ist als auch zusätzlich unmittelbar mit der Wirkung der Aktorelemente (11, 12) zur Dämpfung beaufschlagt ist und daß das Magnetelement (8) als Permanentmagnet ausgeführt und so ausgebildet ist, daß durch seine Rotation keine Änderung der Magnetkräfte bewirkt wird.

2. Rotorspinnvorrichtung nach Anspruch 1, **dadurch gekennzeichnet, daß** das von der Aktoreinrichtung beaufschlagte rotierende Magnetelement (8) so angeordnet ist, daß die Sensorik an der Wirkstelle mindestens zwei Sensorelemente (15, 16) zur Detektion radialer Lageabweichung des Rotorschaftes (9) umfaßt und daß die Sensorelemente (15, 16) und die Aktorelemente (11, 12) der Wirkstelle in einer senkrecht zur Rotationsachse aufgespannten Ebene angeordnet sind.

3. Rotorspinnvorrichtung nach Anspruch 1 oder 2, **dadurch gekennzeichnet, daß** die Aktorelemente zu den Sensorelementen (15, 16) der Wirkstelle (30) in Rotationsrichtung winkelversetzt angeordnet sind.

4. Rotorspinnvorrichtung nach Anspruch 2 oder 3, **dadurch gekennzeichnet, daß** die zwei Aktorelemente (11, 12) zueinander und die zwei Sensorelemente (15, 16) zueinander in Rotationsrichtung jeweils um 90 Grad winkelversetzt angeordnet sind.

5. Rotorspinnvorrichtung nach einem der vorhergehenden Ansprüche, **dadurch gekennzeichnet, daß** jedem Aktorelement (11, 12) ein in bezug auf die Rotationsachse diametral gegenüberliegendes zusätzliches Aktorelement (13, 14) zugeordnet ist und daß das Aktorelement (11, 12) und das zusätzliche Aktorelement (13, 14) das rotierende Magnetelement (8) jeweils mit einer gleichgroßen und gleichgerichteten Kraft beaufschlagen.

6. Rotorspinnvorrichtung nach einem der vorhergehenden Ansprüche, **dadurch gekennzeichnet, daß** das rotierende Magnetelement (8) als ein den Rotorschaft (9) umschließender Permanentmagnetring ausgebildet ist und daß die Aktorelemente (11, 12, 13, 14) axial beabstandet vor dem Permanentmagnetring angeordnet sind.

7. Rotorspinnvorrichtung nach einem der vorhergehenden Ansprüche, **dadurch gekennzeichnet, daß** die Regeleinrichtung (27) Elemente aufweist, die zur ausschließlich kapazitiven Auskopplung der von den Sensorelementen (15, 16) generierten Signale dienen.

## Claims

1. A rotor spinning device having a contactless, passive radial bearing of the spinning rotor and having a dampening device which is constructed for the damping of radially directed vibrations of the spinning rotor, wherein the damping device comprises a sensor device, a control device and an actor device and the actor device is designed so that it acts on the rotor shaft (9) at at least one action point (30) and at the action point (30) comprises at least two fixed actor elements (11, 12) constructed as magnet elements,
**characterised in that** a magnet element (8) is securely connected to the rotating rotor shaft (9),
**in that** the magnet element (8) is both an active element of the passive bearing of the spinning rotor and also additionally is stressed directly with the action of the actor elements (11, 12) for damping
and **in that** the magnet element (8) is designed and constructed as a permanent magnet so that no change in the magnetic forces is brought about by its rotation.

2. A rotor spinning device according to Claim 1,
**characterised in that** the rotating magnet element (8) stressed by the actor device is disposed so that the sensor technology at the action point comprises at least two sensor elements (15, 16) for the detection of radial position error of the rotor shaft (9)
and **in that** the sensor elements (15, 16) and the actor elements (11, 12) of the action point are disposed in a plane fixed perpendicularly to the axis of rotation.

3. A rotor spinning device according to Claim 1 or 2,
**characterised in that** the actor elements are disposed angularly displaced to the sensor elements (15, 16) of the action point (30) the direction of rotation.

4. A rotor spinning device according to Claim 2 or 3,
**characterised in that** the two actor elements (11, 12) are disposed angularly displaced by 90 degrees in relation to one another and the two sensor elements (15, 16) are disposed angularly displaced by 90 degrees in relation to one another in the direction of rotation.

5. A rotor spinning device according to one of the preceding Claims,
**characterised in that** an additional actor element (13, 14) which is diametrically opposite the axis of rotation is associated with each actor element (11, 12)
and **in that** the actor element (11, 12) and the additional actor element (13, 14) stress the rotating magnet element (8) respectively with a force of equal size and acting in the same direction.

6. A rotor spinning device according to one of the preceding Claims,
**characterised in that** the rotating magnet element (8) is constructed as a permanent magnet ring surrounding the rotor shaft (9)
and **in that** the actor elements (11, 12, 13, 14) are disposed axially spaced in front of the permanent magnet ring.

7. A rotor spinning device according to one of the preceding Claims,
**characterised in that** the control mechanism (27) comprises elements which serve for the exclusively capacitive decoupling of the signals generated by the sensor elements (15, 16).

## Revendications

1. Dispositif de filature à rotor, avec un montage radial du rotor, passif et sans contact, et avec un équipement d'amortissement qui est conçu pour amortir des oscillations dirigées radialement du rotor de filature, l'équipement d'amortissement comprenant un équipement détecteur, un équipement régulateur et un équipement actionneur et l'équipement actionneur étant réalisé de telle sorte qu'il agit en au moins un point d'action (30) sur l'arbre de rotor (9) et présente au point d'action (30) au moins deux éléments actionneurs stationnaires (11, 12) réalisés sous la forme d'éléments magnétiques,
**caractérisé en ce qu'**un élément magnétique (8) est fixement assemblé à l'arbre de rotor rotatif (9), **en ce que** l'élément magnétique (8) à la fois est un élément opérationnel du montage passif du rotor de filature et en outre est directement sollicité par l'action des éléments actionneurs (11, 12) pour l'amortissement, et **en ce que** l'élément magnétique (8) est réalisé sous forme d'aimant permanent et conçu de telle sorte que sa rotation n'engendre pas de modification des forces magnétiques.

2. Dispositif de filature à rotor selon la revendication 1, **caractérisé en ce que** l'élément magnétique rotatif (8) sollicité par l'équipement actionneur est disposé de telle sorte que l'équipement de détection comprend, au point d'action, au moins deux éléments détecteurs (15, 16) pour la détection d'un écart radial de position de l'arbre de rotor (9), et **en ce que** les éléments détecteurs (15, 16) et les éléments actionneurs (11, 12) du point d'action sont disposés dans un plan sous-tendu perpendiculairement à l'axe de rotation.

3. Dispositif de filature à rotor selon la revendication 1 ou 2, **caractérisé en ce que** les éléments actionneurs sont disposés en étant décalés angulairement, dans la direction de rotation, par rapport aux éléments détecteurs (15, 16) du point d'action (30).

4. Dispositif de filature à rotor selon la revendication 2 ou 3, **caractérisé en ce que** les deux éléments actionneurs (11, 12) l'un par rapport à l'autre, et les deux éléments détecteurs (15, 16) l'un par rapport à l'autre, sont disposés en étant respectivement décalés angulairement de 90° dans la direction de rotation.

5. Dispositif de filature à rotor selon l'une des revendications précédentes, **caractérisé en ce qu'**à chaque élément actionneur (11, 12) est associé un élément actionneur supplémentaire (13, 14), diamétralement opposé par rapport à l'axe de rotation, et **en ce que** l'élément actionneur (11, 12) et l'élément actionneur supplémentaire (13, 14) sollicitent respectivement l'élément magnétique rotatif (8) avec une force de même ampleur et de même direction.

6. Dispositif de filature à rotor selon l'une des revendications précédentes, **caractérisé en ce que** l'élément magnétique rotatif (8) est réalisé sous la forme d'un aimant permanent annulaire entourant l'arbre de rotor (9), et **en ce que** les éléments actionneurs (11, 12, 13, 14) sont disposés en étant axialement distants devant l'aimant permanent annulaire.

7. Dispositif de filature à rotor selon l'une des revendications précédentes, **caractérisé en ce que** l'équipement régulateur (27) présente des éléments qui servent au découplage exclusivement capacitif des signaux générés par les éléments détecteurs (15, 16).
